# EUROPEAN PATENT APPLICATION

(11) **EP 1 918 555 A1**
(43) Date of publication of application: **07.05.2008**
(21) Application number: 06783002.6
(22) Date of filing: 24.08.2006
(51) Int. Cl.: F02D 41/04, F02D 41/38, F02D 45/00

(54) **CONTROLLER FOR DIESEL INTERNAL COMBUSTION ENGINE**

(30) Priority: 25.08.2005 JP 2005243691
(71) Applicant: TOYOTA JIDOSHA KABUSHIKI KAISHA, Toyota-shi, Aichi-ken, 471-8571 (JP)
(72) Inventor: TERADA, Yasuyuki, Toyota-shi Aichi 471-8571 (JP)
(74) Representative: Kuhnen & Wacker
(86) International application number: PCT/JP2006/316598
(87) International publication number: WO 2007/023890

(57) **Abstract**

A control apparatus calculates deviations Δt of detection temperatures of a plurality of temperature sensors including an intake air temperature sensor, a post-intercooler intake air temperature sensor, a water temperature sensor, a fuel temperature sensor and the like. It is possible to obtain information of an outside air temperature which is not affected by a relative wind and other heat sources, by learning, for example, an intake air temperature tha as a current outside air temperature, in the case that the deviations Δt of the detection temperatures are within a predetermined range. In the case that the outside air temperature (for example, -5°C or less) which cannot help using a low cetane number fuel is determined on the basis of the obtained accurate outside air temperature information, the control apparatus determines that the low cetane number fuel is used, and executes a low cetane number fuel compensation control. Accordingly, it is possible to reduce a combustion noise and suppress misfires.

## Description

### TECHNICAL FIELD

The present invention relates to a control apparatus for a diesel internal combustion engine mounted on a vehicle, a ship or the like, and more particularly to a control apparatus for a diesel internal combustion engine using a low cetane number fuel in winter season in which an outside air temperature is equal to or less than a predetermined value.

### BACKGROUND ART

In a diesel internal combustion engine (hereinafter, refer also to "diesel engine") mounted on a vehicle or the like, there is executed a fuel injection control of controlling a fuel injection timing and a fuel injection amount in correspondence to an operation state such as an engine speed, an accelerator pedal position, a cooling water temperature, an intake air temperature or the like. Further, in the diesel engine, in order to prevent a vibration and a noise from being generated, there is executed a control of executing a pilot injection injecting a small amount of fuel, and executing a main injection at a time when the fuel comes to an ignition state, or a control for advancing a main injection timing.

On the other hand, if a normal fuel (diesel oil) is used in the winter season in the diesel engine, there is a problem of a fuel freeze that the fuel becomes like wax in a place most cooling down during a vehicle travel, for example, within a fuel filter, and the fuel cannot be supplied. In order to prevent this problem, a low cetane number fuel (for example, grade Special No. 3 specified in JIS K2204) is supplied in the winter season.

In the case of using the low cetane number fuel, a combustion noise is deteriorated even if environmental conditions such as a water temperature, an intake air temperature or the like are constant. In other words, since the low cetane number fuel has a bad ignition performance, an ignition delay is generated, the combustion is rapidly generated, the combustion noise is deteriorated, and there is a case that misfires are generated without ignition in some cases and a shock is generated. Particularly, a deterioration of the combustion noise and the accidental fire are significantly generated in a direct-injection diesel engine. The phenomenon such as deterioration of the combustion noise, misfires or the like can be recovered by an increase of a pilot injection amount and advancement of an injection timing. However, it is necessary to execute a compensation control (a low cetane number fuel compensation control) relating to the increase of the injection amount and the advancement of the injection timing by determining that the low cetane number fuel is used.

As a technique for controlling the diesel engine by determining the cetane number of the fuel, there has been proposed a technique which is provided with a cetane number detection sensor detecting a cetane number by measuring a specific gravity, a refraction factor or the like of the fuel within the fuel tank, and controls a fuel injection amount on the basis of an output of the sensor (for example, refer to patent document 1).

Further, there is a method for executing a fuel compensation control by learning the use of a low cetane number fuel on the basis of an engine rotation fluctuation caused by misfires.

On the other hand, as a method for achieving a reduction of the combustion noise at a time of using the low cetane number fuel, there is a method for switching a mode from a normal control mode to a low cetane number fuel compensation control mode on the basis of a switch operation by a user at a time of supplying the low cetane number fuel.
Patent Document 1: Japanese Laid-Open Patent Publication No. 3-105042

### DISCLOSURE OF THE INVENTION

### PROBLEM TO BE SOLVED BY THE INVENTION

However, it is technically hard to mount the cetane number detection sensor accurately detecting the cetane number of the fuel to the vehicle, and it is hard to achieve the technique in terms of a cost. Further, in the method of learning the use of the low cetane number fuel on the basis of the misfires, since the use of the low cetane number fuel is determined by detecting the actual misfires, it is impossible to avoid a problem of a generation of a white smoke or a torque reduction at a time of the misfires.

On the other hand, in accordance with the method of selecting the normal control or the low cetane number fuel compensation control on the basis of the switch operation at a time of supplying the fuel, in the case that the user fails to operate the switch at a time of supplying the low cetane number fuel, the engine is operated in accordance with the normal control in spite that the low cetane number fuel is supplied. Thus, the problem of the deterioration of the combustion noise or the misfires mentioned above is generated. In contrast, if the switch is erroneously set to the compensation mode in the case that the supplied fuel includes the normal fuel, the engine is operated in accordance with the low cetane number fuel compensation control at a time of using the normal fuel. Thus, there is generated a problem that the pilot injection amount becomes too much so as to generate a deterioration of an emission. Further, in the case that the switch selecting the fuel is provided, there is a case that it is impossible to abide by a provision of a regulation (an exhaust gas regulation ECE), that is, "in the case that a switch operable by a user is provided, an exhaust gas discharge standard should be satisfied regardless of the fuel mode selected by the switch".

Since the temperature within an engine compartment is increased after warming up the engine even in the winter season and the intake air temperature or the like is not different from that in seasons other than the winter season, the problem of the combustion noise or the like at a time of using the low cetane number fuel cannot be solved even by adding a cold compensation including the compensation relating to the low cetane number fuel. For example, since a condition that a cooling water temperature is 25°C is a temperature condition existing just after the engine start even in the spring season or the autumn season, and a temperature condition experienced during the engine warm-up even in the winter season, it is impossible to distinguish these cases. Accordingly, it is impossible to adapt the control condition in such a manner that no severe problem is generated in both of the case of using the low cetane number fuel and the case of using the normal fuel, in a state in which the water temperature is 25°C.

The present invention is made by taking the actual conditions mentioned above into consideration, and an objective of the present invention is to provide a control apparatus for a diesel internal combustion engine which can determine a use of a low cetane number fuel in the diesel internal combustion engine on the basis of a simple structure, whereby it is possible to achieve suppression of combustion noise (improvement of a noise resistance) and suppression of misfires (improvement of a drivability) at a time of using the low cetane number fuel.

### MEANS FOR SOLVING THE PROBLEM

In accordance with the present invention, there is provided a control apparatus for a diesel internal combustion engine controlling an operation state of the diesel internal combustion engine using a low cetane number fuel in a winter season in which an outside air temperature is equal to or less than a predetermined value, wherein the control apparatus is provided with an outside air temperature learning means calculating a deviation of detection temperatures of a plurality of temperature sensors and learning an outside air temperature in the case that the deviation of the detection temperatures is within a predetermined range, and a low cetane number fuel compensation control is executed in the case that the outside air temperature learnt by the outside air temperature learning means is equal to or less than a predetermined value.

In the present invention, the low cetane number fuel compensation control includes a compensation control of executing any one of a compensation for changing a main injection timing and a compensation for increasing a pilot injection amount.

In the present invention, the method of learning the outside air temperature includes a method of learning a detection temperature of any one of a plurality of temperature sensors or an average value of the detection temperatures of a plurality of temperature sensors as the outside air temperature.

Specific structures of the present invention include a structure in which a plurality of temperature sensors used for learning the outside air temperature are constituted by an intake air temperature sensor, a post-intercooler intake air temperature, a water temperature sensor, and a fuel temperature sensor, and the outside air temperature is learnt on the basis of the detection temperatures of at least three kinds of temperature sensors.

It is preferable that the diesel internal combustion engine use diesel oil as a normal fuel in the other seasons than the winter season.

It is preferable that the control apparatus execute the low cetane number fuel compensation control in the case that the outside air temperature is equal to or less than a freezing temperature of the diesel oil.

It is preferable that the control apparatus execute the normal control in the case that the outside air temperature exceeds a freezing temperature of the diesel oil.

Next, a description will be given below of an operation of the present invention.

First, in the present invention, the condition of using the low cetane number fuel is determined in the case that the outside air temperature indicates the winter season, by utilizing the outside air temperature.

It is necessary to accurately measure the outside air temperature for determining the use of the low cetane number fuel from the outside air temperature. However, in the temperature sensor such as the intake air temperature sensor, the water temperature sensor or the like used for controlling the diesel engine, it is impossible to directly detect the outside air temperature. Further, since the temperature sensor such as the intake air temperature sensor or the like equipped in the vehicle is affected by a heat source within the engine compartment and a relative wind, it is impossible to accurately learn the outside air temperature. There is a vehicle provided with a temperature sensor for controlling an air conditioner or the like. However, since the temperature sensor is affected by the heat source within the engine compartment and the relative wind, it is hard to accurately detect the outside air temperature.

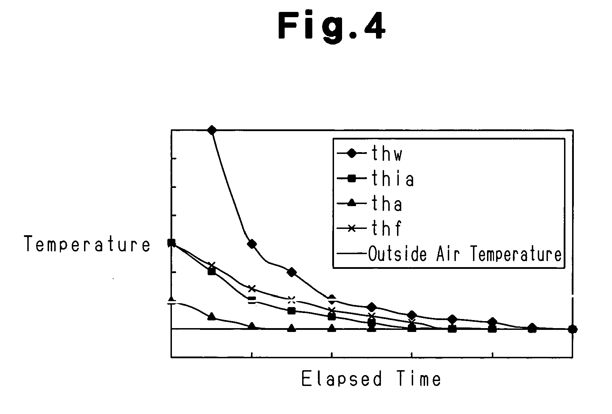

Accordingly, in the present invention, a method of accurately learning the outside air temperature by using a plurality of temperature sensors equipped in the vehicle or the like has been found out. Specifically, a feature of the present invention exists in a point that the outside air temperature is learnt from the output of the temperature sensors by determining that the detection temperatures of the respective temperature sensors become approximately equal to the outside air temperature in the case that the deviation of the detection temperatures of a plurality of temperature sensors is equal to or less than the predetermined value, by utilizing a phenomenon (refer to Fig. 4) that the detection temperatures of all of a plurality of temperature sensors converge into a point near the outside air temperature, and the detection temperatures of the respective temperature sensors are within a predetermined range, in the case that a time (a soak time) from an engine stop to a restart is long, for example, an engine start time first in the morning or the like.

Further, as mentioned above, it is possible, at a time when the deviation of a plurality of temperature sensors becomes equal to or less than the predetermined value as mentioned above, to obtain the temperature which is not affected by the relative wind and other heat sources, by learning the detection temperature obtained by any one sensor of a plurality of temperature sensors (or the average value of the detection temperatures of a plurality of temperature sensors) as the current outside air temperature. The low cetane number fuel compensation control is executed by determining that the low cetane number fuel is used, in the case that it is the outside air temperature (for example, -5°C or less) which cannot help using the low cetane number fuel, on the basis of the accurate outside air temperature information obtained thereby. Accordingly, it is possible to always operate the diesel internal combustion engine in an optimum control state, and it is possible to achieve the reduction of the combustion noise and the suppression of the misfires.

In the present invention, the number of the temperature sensors used for learning the outside air temperature may be two or three or more. In this case, in the case of using two temperature sensors, there is a case that the deviation of the detection temperatures obtained by two temperature sensors comes to a predetermined range in the case that the temperature is lowered to an optional temperature (for example, 50°C) even if the soak state has not been generated for a long time, so that there is generated an erroneous detection that the learning of the outside air temperature is executed by the temperature. In order to avoid the erroneous detection, it is preferable that the number of the temperature sensors used for learning the outside air temperature be equal to or more than three.

### BRIEF DESCRIPTION OF THE DRAWINGS

Fig. 1 is a view of an outline structure showing one example of a diesel engine to which the present invention is applied:
Fig. 2 is a block diagram showing a structure of a control system including an ECU;
Fig. 3 is a flowchart showing contents of an engine control executed by the ECU; and
Fig. 4 is a graph showing variations of an intake air temperature tha in a soak state, a post-intercooler intake air temperature thia, a water temperature thw, and a fuel temperature thf.

### BEST MODE FOR CARRYING OUT THE INVENTION

A description will be given below of an embodiment in accordance with the present invention with reference to the accompanying drawings.

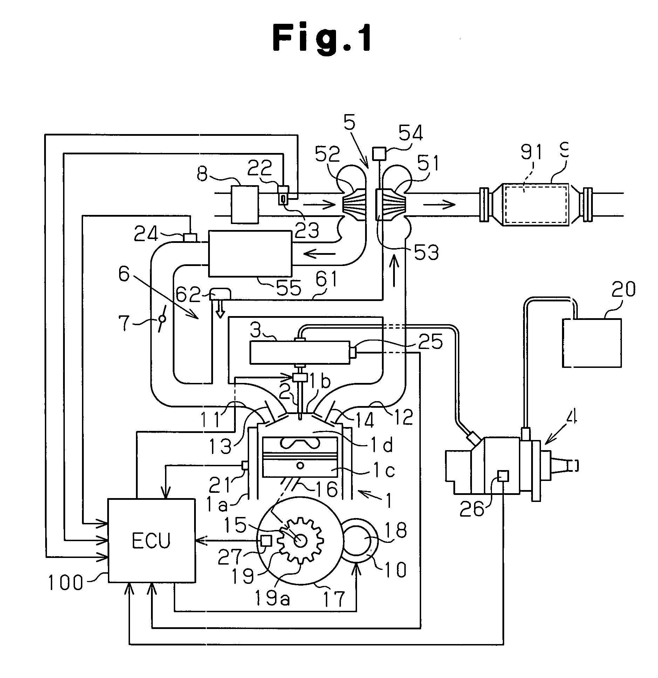

First, a description will be given of an outline structure of a diesel engine to which the present invention is applied, with reference to Fig. 1. Only a structure of one cylinder of an engine is shown in Fig. 1.

A diesel engine 1 (hereinafter, referred to as "engine 1") in accordance with this embodiment is an engine applied to a cold district, and is structured such as to use a low cetane number fuel (for example, grade Special No. 3) in a winter season in which an outside air temperature becomes equal to or less than -5°C and use a normal fuel (a diesel oil) in the other seasons than the winter season.

The engine 1 shown in Fig. 1 is a direct-injection four-cylinder engine, and is structured such that a piston 1c reciprocating in a vertical direction is provided within a cylinder block 1a constituting each of the cylinders. Each of the pistons 1c is coupled to a crankshaft 15 via a connecting rod 16, and a reciprocating motion of each of the pistons 1c is converted into a notation of the crankshaft 15 by the connecting rod 16.

A ring gear 17 is provided in the crankshaft 15. A pinion gear 18 of a starter motor 10 starting at a time of starting the engine 1 is engaged with the ring gear 17, and a cranking of the engine 1 is executed on the basis of a rotation of the ring gear 17 in accordance with the starting of the starter motor 10.

A signal rotor 19 is attached to the crankshaft 15. A plurality of projections (teeth) 19a are provided on an outer peripheral surface of the signal rotor 19 so as to be spaced at a uniform angle. A crank position sensor (an engine speed sensor) 27 is arranged in a side portion of the signal rotor 19. The crank position sensor 27 is constituted, for example, by an electromagnetic pickup, and generates a pulse-shaped signal (output pulse) corresponding to the projection 19a of the signal rotor 19 at a time when the crankshaft 15 is rotated.

A water temperature sensor 21 detecting an engine cooling water temperature (hereinafter, referred to as "water temperature thw") is arranged in the cylinder block 1a of the engine 1. Further, a cylinder head 1b is provided in an upper end of the cylinder block 1a, and a combustion chamber 1d is formed between the cylinder head 1b and the piston 1c. The cylinder head 1b is provided with an injector 2 for injecting a fuel into the combustion chamber 1d.

A common rail 3 is connected to the injector 2, and the fuel within the common rail 3 is injected into the combustion chamber 1d from the injector 2 during an open state of an electromagnetic valve of the injector 2. A fuel pressure sensor 25 is arranged in the common rail 3.

A supply pump 4 for supplying the fuel is connected to the common rail 3. The supply pump 4 is provided with a fuel temperature sensor 26 detecting a temperature of the fuel (hereinafter, referred to as "fuel temperature thf"). The supply pump 4 is driven by a rotating force of the crankshaft 15 of the engine 1, supplies the fuel to the common rail 3 from the fuel tank 20 on the basis of the drive of the supply pump 4, and the fuel is injected into the combustion chamber 1d in each of the cylinders of the engine 1 by opening the injector 2 at a predetermined timing. The injected fuel is burnt within the combustion chamber 1d, and is exhausted as an exhaust gas. In this case, a valve opening timing of the injector 2, that is, a fuel injection timing is controlled by an electronic control unit (ECU) 100 mentioned below.

An intake passage 11 and an exhaust passage 12 are connected to the combustion chamber 1d of the engine 1. An intake valve 13 is provided between the intake passage 11 and the combustion chamber 1d, and the intake passage 11 and the combustion chamber 1d are communicated or shut off by driving the intake valve 13. Further, an exhaust valve 14 is provided between the exhaust passage 12 and the combustion chamber 1d, and the exhaust passage 12 and the combustion chamber 1d are communicated or shut off by driving the exhaust valve 14. The intake valve 13 and the exhaust valve 14 are driven by an intake cam shaft and an exhaust cam shaft (not shown) to which the rotation of the crankshaft 15 is transmitted.

In the intake passage 11, there are arranged an air cleaner 8, an air flow meter 22 detecting an intake air amount, an intake air temperature sensor 23 (incorporated in the air flow meter 22) detecting a temperature of the intake air (hereinafter, referred to as an intake air temperature tha) before being supercharged by a turbocharger 5 mentioned below, an intake throttle valve 7 and the like. Further, an exhaust gas purification apparatus 9 having a diesel particulate filter (DPF) 91 is arranged in the exhaust passage 12.

The engine 1 is provided with the turbocharger 5 supercharging the intake air by utilizing the exhaust gas pressure. The turbocharger 5 includes a turbine 51 arranged in the exhaust passage 12, and a compressor 52 arranged in the intake passage 11, and is structured such that the turbine 51 arranged in the exhaust passage 12 is rotated by energy of the exhaust gas, and the compressor 52 arranged in the intake passage 11 is rotated in accordance therewith. Further, the intake air is supercharged by the rotation of the compressor 52, and a supercharged air is forcibly fed to the combustion chamber 1d in each of the cylinders of the engine 1. The turbocharger 5 in accordance with the present embodiment includes a variable nozzle type turbocharger, and is provided with a variable nozzle vane mechanism 53 in the turbine 51, and it is possible to adjust a supercharging pressure of the turbocharger 5 by adjusting an opening degree of the variable nozzle vane mechanism 53. The opening degree of the variable nozzle vane mechanism 53 is adjusted by an actuator 54 such as a DC motor or the like controlled by the ECU 100.

In a downstream side of the compressor 52 of the turbocharger 5, the intake passage 11 is provided with an intercooler 55 for cooling the intake air which comes to a high temperature by being compressed by the compressor 52. In a downstream side of the intercooler 55, in the intake passage 11, there is arranged a post-intercooler intake air temperature sensor 24 detecting a temperature of the intake air passing through the intercooler 55 (hereinafter, referred to as "post-intercooler intake air temperature thia").

Further, the engine 1 is provided with an exhaust gas recirculation (EGR) apparatus 6. The EGR apparatus 6 is an apparatus lowering a combustion temperature within the cylinders by introducing a part of the exhaust gas to the intake air so as to reduce a generating amount of NOx. The EGR apparatus 6 is provided with an EGR passage 61 communicating the intake passage 11 and the exhaust passage 12, and an EGR valve 62 provided in the EGR passage 61, and it is possible to adjust an EGR amount (an exhaust gas recirculation amount) introduced to the intake passage 11 from the exhaust passage 12, by adjusting an opening degree of the EGR valve 62. The opening degree of the EGR valve 62 is controlled by the ECU 100.

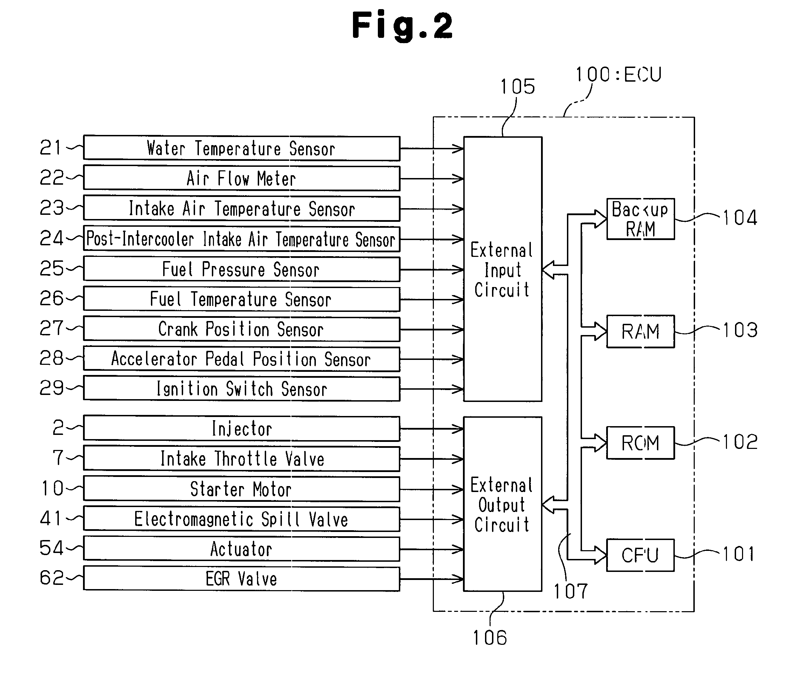

The ECU 100 is provided with a CPU 101, a ROM 102, a RAM 103, a backup RAM 104 and the like, as shown in Fig. 2. The ROM 102 stores various control programs and maps which are referred to at a time of executing the control programs. The CPU 101 executes various computing processes on the basis of the various control programs and the maps stored in the ROM 102. Further, the RAM 103 corresponds to a memory temporarily storing result of computation in the CPU 101 and data input from the sensors, and the backup RAM 104 corresponds to a nonvolatile memory storing data to be stored, for example, at a time when the engine 1 stops.

The ROM 102, the CPU 101, the RAM 103 and the backup RAM 104 are connected to each other via a bus 107, and are connected to an external input circuit 105 and an external output circuit 106.

To the external input circuit 105, there are connected the water temperature sensor 21, the air flow meter 22, the intake air temperature sensor 23, the post-intercooler intake air temperature sensor 24, the fuel pressure sensor 25, the fuel temperature sensor 26, the crank position sensor 27, the accelerator pedal position sensor 28 and the ignition switch 29. On the other hand, to the external output circuit 106, there are connected the injector 2, the intake throttle valve 7, the starter motor 10, an electromagnetic spill valve 41 of the supply pump 4, an actuator 54 adjusting an opening degree of a variable nozzle vane mechanism 53 in the turbocharger 5, and an EGR valve 62.

Further, the ECU 100 executes various controls of the engine 1 including the outside air temperature learning process discussed below on the basis of outputs of the various sensors such as the water temperature sensor 21, the air flow meter 22, the intake air temperature sensor 23, the post-intercooler intake air temperature sensor 24, the fuel pressure sensor 25, the fuel temperature sensor 26, the crank position sensor 27, the accelerator pedal position sensor 28 and the like. Further, the ECU 100 executes a compensation control (a low cetane number fuel compensation control) at a time of using a low cetane number fuel, in addition to the normal engine control (the normal control).

The present invention is characterized by detecting the outside air temperature, determining whether it is the winter season, on the basis of the detected outside air temperature, and determining a condition of using the low cetane number fuel in the case that the winter season is determined, as mentioned above. In order to achieve this, in accordance with the present embodiment, the outside air temperature is learnt by using the respective detection temperatures (the intake air temperature tha, the post-intercooler intake air temperature thia, the water temperature thw and the fuel temperature thf) of the intake air temperature sensor 23, the post-intercooler intake air temperature sensor 24, the water temperature sensor 21 and the fuel temperature sensor 26. A description will be given below of the outside air temperature learning.

First, an extended soak time can be considered as an opportunity at which the outside air temperature can be accurately detected. The present embodiment is provided on the assumption of the engine start time first thing in the morning, and the respective detection temperatures (the intake air temperature tha, the post-intercooler intake air temperature thia, the water temperature thw and the fuel temperature thf) of four temperature sensors converge into the temperature near the outside air temperature, as shown in Fig. 4, and the intake air temperature tha, the post-intercooler intake air temperature thia, the water temperature thw and the fuel temperature thf are within a predetermined range. Accordingly, as far as deviations Δt (a difference between a maximum value and a minimum value of four detection temperatures) of the intake air temperature tha, the post-intercooler intake air temperature thia, the water temperature thw and the fuel temperature thf are all within the predetermined range (for example, ± 1°C), the extended soak state is determined, by utilizing the phenomenon mentioned above, and the intake air temperature tha detected by the intake air temperature sensor 23 in four temperature sensors is learnt as the current outside air temperature.

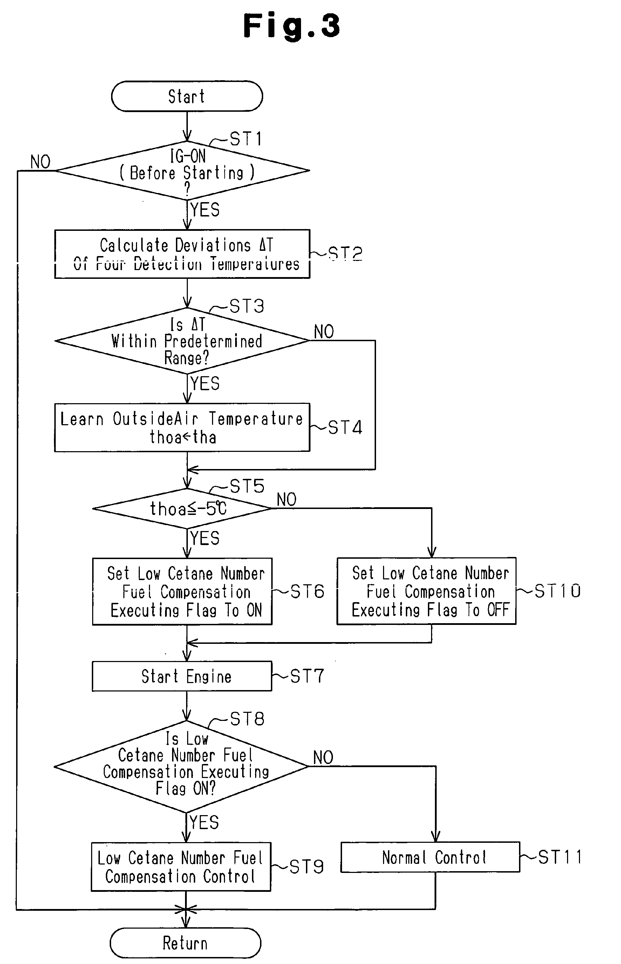

Next, a description will be given of one example of the control of the engine including the outside air temperature learning process with reference to a flowchart in Fig. 3.

In step ST1, the ECU 100 determines whether the ignition switch 29 is in an on state (IG-ON), goes to step ST2 at a time when IG-ON is established (before the engine 1 starts), reads the intake air temperature tha, the post-intercooler intake air temperature thia, the water temperature thw and the fuel temperature thf from the respective outputs of the intake air temperature sensor 23, the post-intercooler intake air temperature sensor 24, the water temperature sensor 21, and the fuel temperature sensor 26, and calculates deviations Δt of these four detection temperatures (differences between maximum values and minimum values of four detection temperatures).

Next, in step ST3, step determines whether the deviation Δt exists within a predetermined range (for example, ±1°C). In the case that the result of determination in step ST3 is an affirmative determination, the process goes to step ST4, and learns the detection temperature (the intake air temperature tha) of the intake air temperature sensor 23 as the current outside air temperature (thoa ← tha). The learnt number (thoa) of the outside air temperature is not updated until the next learning opportunity is given. On the other hand, in the case that the result of determination in step ST3 is a negative determination, the process goes to step ST5 without executing the outside air temperature learning.

In step ST5, the ECU 100 determines whether the current outside air temperature thoa learnt in step ST4 is equal to or less than -5°C, and in the case that the result of determination is an affirmative determination [thoa ≤ -5°C], it determines that the fuel is a low cetane number fuel (for example, special 3), goes to step ST6, sets "low cetane number fuel compensation executing flag" to an ON state, and thereafter starts (cranks) the engine 1 in step ST7.

On the other hand, in the case that the result of determination in step ST5 is a negative determination, the ECU 100 determines that the fuel is a normal fuel (a diesel oil), and sets "low cetane number fuel compensation executing flag" to an OFF state so as to start the engine 1, in step ST10.

Since the normal fuel (the diesel oil) is frozen at a temperature equal to or less than -5°C, the determination condition of step ST3 is set to [thoa ≤ -5°C] in this embodiment. However, it is not limited to this, the determination value in step ST3 may be appropriately selected by taking into consideration the temperature which cannot help using the low cetane number fuel, in correspondence to the kind of the used normal fuel.

Further, the ECU 100 determines whether the low cetane number fuel compensation executing flag is in the ON state (step ST8) at a time of starting the engine 1, and controls the operation of the engine 1 in accordance with the low cetane number fuel compensation control in the case that the low cetane number fuel compensation executing flag is in the ON state (step ST9). In this embodiment, as the low cetane number fuel compensation control, there is executed any one compensation control of a compensation for advancing the main injection timing at a specified value and a compensation for increasing the pilot injection amount.

On the other hand, in the case that the result of determination in step ST8 is a negative determination, that is, in the case that the low cetane number fuel compensation executing flag is in the OFF state at a time when the engine 1 starts, the operation of the engine 1 is controlled in accordance with the normal control (step ST11).

The cetane number fuel compensation control is executed, for example, in correspondence to the operation state of the engine 1 by previously forming and storing a map for the cetane number fuel compensation control which defines advancing amount of the main injection timing or an increase of the pilot injection amount, and referring to the map for the cetane number fuel compensation control.

As mentioned above, in this embodiment, the extended soak state is determined by using four temperature sensors comprising the intake air temperature sensor 23, the post-intercooler intake air temperature sensor 24, the water temperature sensor 21, and the fuel temperature sensor 26 detecting the temperatures of the different positions. In the case that the deviations Δt of the detection temperatures of these four temperature sensors are within the predetermined range, and the intake air temperature tha detected by the intake air temperature sensor 23 is learnt as the current outside air temperature. Accordingly, it is possible to accurately learn the outside air temperature without being affected by the heat source generated from each of the vehicle portions and the relative wind.

Further, since the low cetane number fuel compensation control or the normal control is executed by determining the kind of the fuel on the basis of the accurate outside air temperature learnt value mentioned above, it is possible to always operate the engine 1 in the optimum control state. Accordingly, it is possible to achieve a suppression of a combustion noise (an improvement of a noise resistance) and a suppression of an accident fire (an improvement of a drivability) at a time of using the low cetane number fuel.

Further, since the outside air temperature is detected by utilizing four temperature sensors equipped in the vehicle, it is possible to achieve the advantages mentioned above on the basis of a low cost without increasing the parts number.

In the winter season in which the low cetane number fuel is used, the minimum temperature of a day comes to, for example, 0°C even at dead of winter. In the case that the meteorological condition mentioned above is given, the result of determination in step ST5 in Fig. 3 comes to a negative determination [tha > -5°C], and the low cetane number fuel flag is set to OFF, so that there is generated a problem that the engine 1 is operated in accordance with the normal control in spite of the use of the low cetane number fuel. In order to avoid this, it is preferable to employ a method of setting the low cetane number fuel flag to OFF only in the case that the condition (tha > -5°C) that the outside air temperature learnt value is over -5°C continues for a predetermined time (day), without executing the process of setting the low cetane number fuel flag to OFF just after the outside air temperature learnt value learned in the next opportunity exceeds -5°C, under a condition that the day having the outside air temperature learnt value equal to or less than -5°C continues, that is, a hysteresis process. In this case, days of the hysteresis process may be appropriately determined by taking into consideration the meteorological condition or the like of the cold distinct.

In the embodiment mentioned above, the intake air temperature tha by the intake air temperature sensor 23 is learnt as the current outside air temperature. However, the structure is not limited to this, but the detection temperature of any one of the post-intercooler intake air temperature sensor 24, the water temperature sensor 21, and the fuel temperature sensor 26 may be learnt as the current outside air temperature. In this case, in the case of the diesel engine, taking into consideration the matter that the intake air temperature sensor 23 is arranged at the position closest to the outside air, and the matter that the detection range is narrow and the detection precision is highest, it is preferable in terms of obtaining an accurate outside air temperature learnt value, to learn the intake air temperature tha by the intake air temperature sensor 23 as the outside air temperature.

In place of the method of learning the detection temperature of one temperature sensor (for example, the intake air temperature sensor) in four temperature sensors as the current outside air temperature as mentioned above, an average value of the detection temperatures of four temperature sensors may be learnt as the current outside air temperature.

In the embodiment mentioned above, there is shown the embodiment in which four temperature sensors are utilized for learning the outside air temperature. However, the present invention is not limited to this, but the number of the temperature sensors used for learning may be set to two or any optional number equal to or more than three. In this case, in order to accurately learn the outside air temperature, it is preferable to use three or more temperature sensors. In other words, in the case of using two temperature sensors, for example, the intake air temperature sensor 23 and the fuel temperature sensor 26, since these temperature sensors detect the temperature of the detected subject existing in the comparatively near temperature region (refer to tha and thf in Fig. 4), the deviations Δt of the detection temperatures tha and thf obtained by two temperature sensors come within a predetermined range (±1°C) even without the extended soak state, at a time when the detected subject is lowered to a certain temperature (for example, 50°C), and there can be generated an erroneous detection that the outside air temperature learning is executed at that temperature. In order to avoid the erroneous detection mentioned above, it is preferable to execute the outside air temperature learning by using three or more temperature sensors.

In the embodiment mentioned above, the outside air temperature is learnt by utilizing the intake air temperature sensor 23, the post-intercooler intake air temperature sensor 24, the water temperature sensor 21 and the fuel temperature sensor 26. However, the outside air temperature may be learnt by adding the other temperature sensors such as an exhaust gas temperature sensor, an outside air temperature sensor for controlling an air conditioner and the like to these temperature sensors. Further, in the case that the outside air temperature is learnt by using two or three or more temperature sensors in six or more temperature sensors including the exhaust gas temperature sensor and the outside air temperature sensor for controlling the air conditioner, it is preferable to include the intake air temperature sensor 23 having a high detection precision, for executing an accurate outside air temperature learning.

In the embodiment mentioned above, there is shown the embodiment in which the exhaust gas purification apparatus in accordance with the present invention is applied to the direct-injection four-cylinder diesel engine. However, the present invention is not limited to this, but may be applied to the other diesel engine having an optional cylinder number, for example, a direct-injection 6-cylinder diesel engine or the like. Further, the present invention can be applied to the other types of diesel engines without being limited to the direct-injection diesel engine.

## Claims

1. A control apparatus for a diesel internal combustion engine, the apparatus controlling an operation state of the diesel internal combustion engine using a low cetane number fuel in a winter season in which an outside air temperature is equal to or less than a predetermined value, the control apparatus being **characterized by** outside air temperature learning means that calculates a deviation of detection temperatures of a plurality of temperature sensors and learns an outside air temperature in the case that the deviation of the detection temperatures is within a predetermined range, wherein a low cetane number fuel compensation control is executed in the case that the outside air temperature learnt by said outside air temperature learning means is equal to or less than a predetermined value.

2. The control apparatus for a diesel internal combustion engine according to claim 1, **characterized in that** said low cetane number fuel compensation control includes any one of a compensation for advancing a main injection timing and a compensation for increasing a pilot injection amount.

3. The control apparatus for a diesel internal combustion engine according to claim 1 or 2, **characterized in that** said outside air temperature learning means learns a detection temperature of any one of said temperature sensors or an average value of the detection temperatures of said temperature sensors as the outside air temperature.

4. The control apparatus for a diesel internal combustion engine according to any one of claims 1 to 3, **characterized in that** said temperature sensors include an intake air temperature sensor, a post-intercooler intake air temperature sensor, a water temperature sensor, and a fuel temperature sensor, wherein the outside air temperature is learnt on the basis of the detection temperatures of at least three kinds of temperature sensors.

5. The control apparatus for a diesel internal combustion engine according to any one of claims 1 to 4, **characterized in that** said diesel internal combustion engine uses a diesel oil as a normal fuel in the other seasons than the winter season.

6. The control apparatus for a diesel internal combustion engine according to claim 5, **characterized in that** said control apparatus executes said low cetane number fuel compensation control in the case that said outside air temperature is equal to or less than a freezing temperature of said diesel oil.

7. The control apparatus for a diesel internal combustion engine according to claim 6, **characterized in that** said control apparatus executes the normal control in the case that said outside air temperature exceeds a freezing temperature of said diesel oil.
